# EUROPEAN PATENT APPLICATION

(11) **EP 1 274 225 A1**
(43) Date of publication of application: **08.01.2003**
(21) Application number: 02254625.3
(22) Date of filing: 02.07.2002
(51) Int. Cl.: H04N 1/32

(54) **System for electronically submitting and monitoring copy reproduction jobs**

(30) Priority: 06.07.2001 US 900684
(71) Applicant: GENERAL ELECTRIC COMPANY, Schenectady, NY 12345 (US)
(72) Inventor: Nabb, Robert William, Mason, Ohio 45040 (US); Shumaker, Lance Christopher, Loveland, Ohio 45140 (US); Anderson, David Thomas, Cincinnati, Ohio 45245 (US); Rice, David Andrew, Mason, Ohio 45040 (US); Darpel, David Mark, Crescent Springs, Kentucky 41017 (US)
(74) Representative: Pedder, James Cuthbert

(57) **Abstract**

Employees (902) of an organization access an application (906) to electronically submit orders for copy reproductions to a copy reproduction service provider (912). Using the application (906), an employee (902) can select the desired copy reproduction service and begin to complete the appropriate order form. Once the order form is completed the employee (902) selects the file or files with the material to be processed. The order information and files are then stored in a database (910), which can be accessed by the copy reproduction service provider (912) through a service provider application (916). Using the service provider application (916), the copy reproduction service provider (912) can view details of the order, download any required files and update the status of the order. The employee (902) can view the status of an order, as it is updated, with the application (906). Finally, when the copy reproduction service provider (912) completes an order, the copy reproduction service provider (912) can distribute the order as instructed by the employee (902).

## Description

The present invention relates generally to submitting orders for copies of materials to a copy reproduction service provider. Specifically, the present invention relates to a system that permits a user to electronically submit orders for copies of materials to a copy reproduction service provider and then subsequently electronically monitor the progress of the service provider in completing the copy orders.

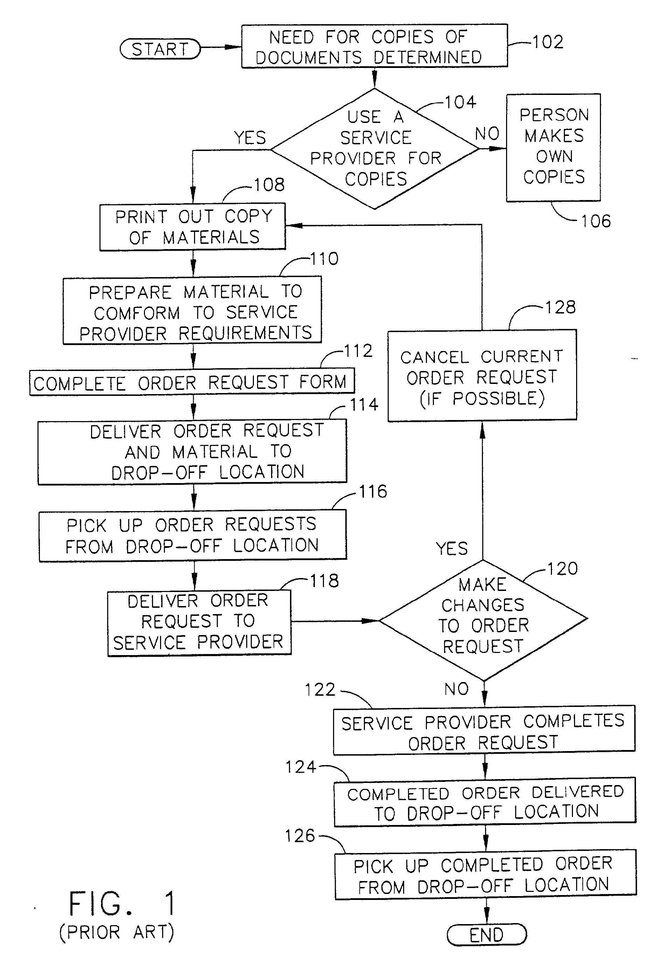

Figure 1 illustrates a prior art process for obtaining copies of particular documents and materials. In step 102, a person makes a determination that copies of a particular set of materials or documents are needed. The particular set of materials can be almost anything from a series of handouts for a lecture to a poster or compact disc. Next, in step 104, a decision is made on whether to have a copy reproduction service provider make the necessary copies. The copy reproduction service provider is typically an in-house provider or an offsite provider that has the proper equipment to handle copy reproduction jobs in an efficient and cost-effective manner. If a copy reproduction service provider is not going to be used, the person who needs the copies has to go to a local or nearby copy machine and make the appropriate copies in step 106. If more than a few copies of the material are required, having the person make the copies in step 106 can be a very inefficient and costly process. The local copy machines that would be used by the person are frequently more inefficient and more costly on a per page basis than the copy machines and equipment used by the copy reproduction service provider. In addition, the person can spend a large amount of personal time in making the copies, which adds to the inefficiency of the process because the person could be using that time to do other work.

If the person decides to use the copy reproduction service provider for the copying of the materials, a copy of the particular materials are printed out or generated in step 108. Next, in step 110, the copy of the material is prepared and arranged in accordance with any requirements or specifications of the copy reproduction service provider. The person then completes an order request form in step 112 and delivers the order request form and materials to a drop-off point or location in step 114. There are usually only a few designated drop-off points available for copy reproduction service provider customers to submit orders for copying. The designated drop-off points may not be in a convenient location for the person, thereby causing the person to spend extra time and effort to submit the order request. A delivery person then picks up the order requests from the drop-off points in step 116 and delivers the order requests to the copy reproduction service provider in step 118. The deliver person usually only makes one or two trips a day to pick up orders from the drop-off points, thus, a person's order request could be waiting at a drop-off point for pick up for a fairly substantial amount of time.

The copy reproduction service provider typically has a system for monitoring and tracking the received order requests. As the order requests are received, the service provider enters the order request into its system and can begin work on the order requests. The copy reproduction service provider usually works on order requests based on priority and due dates. The service provider typically works on the order requests having the highest priority and nearest due date before working on other orders. The service provider then completes the order request in step 122 and has the completed order delivered to the drop-off point by the delivery person in step 124. Finally, the person has to return to the drop-off point to pick up the completed order in step 126.

In addition, the person who submitted the order request could also decide to make a change to the order request in step 120. If the person decides to make a change to the order request, the person usually contacts the copy reproduction service provider to check on the status of the pending order request and to cancel the order request in step 128 (if possible). However, the person is not able to check on the status of the order request before contacting the service provider and may not be able to cancel the order request because it has not yet been received and/or entered by the service provider or because the job has been started and/or completed by the service provider possibly resulting in copies being generated that are no longer useful to the person. After attempting to cancel the current order request in step 128, the person begins the order request process again at step 108 by printing out the materials having any changes incorporated therein. If the person decides not to change the order request, the process proceeds as described above for steps 122-126.

While submitting a copy request to the copy reproduction service provider as described above may result in the efficient and cost effective generation of copies, there are several drawbacks. One drawback is that the turn-around time from the submission of the order request to completion and return of the copies is frequently in the range of a few days. The long turn-around time results from several periods of inactivity on the order request, including delays for pick up and delivery of the order request and delays before the order request is processed by the copy reproduction service provider. Another drawback of the above process is the inability to check on the status of an order request to check if the order request or job has been received, started or completed. Still another drawback of the above process is the possibility of lost or misplaced order requests due to the large amount of transport and handling that are performed on the order requests. Yet a further drawback of the above process is that a lower quality of copies may be received from the copy reproduction service provider because of having to make copies from a less than perfect original or from another copy.

Some attempted solutions have included the hand delivery or faxing of the order requests directly to the copy reproduction service provider. While these solutions may get the order request to the service provider in a quick manner, the solution typically involves more effort by the person submitting the order request and still does not provide the person with any status information apart from contacting the service provider directly. Another solution includes submitting the order request by e-mail, attaching the materials to the e-mail and then sending the e-mail to the service provider through a dedicated secure line or encrypting the order requests and files with an encryption tool and sending the files over the Internet. Again, this solution does not give the person any ability to monitor the status of an order request aside from contacting the service provider. At least one solution for submitting order requests over the Internet to a service provider has been attempted. This Internet solution involves the online submission of an order request and the associated materials as an attachment. The submitted order request is then sent to the copy reproduction service provider's main location and headquarters, which then distributes the order request to the branch of the copy reproduction service provider closest to the person for completion of the order request.

Therefore what is needed is a copy reproduction system for submitting and monitoring requests for copies electronically, which system is simple and easy to use and can result in quicker turn-around times with fewer lost order requests.

One embodiment of the present invention is directed to a system for submitting and monitoring copy reproduction order requests. The system includes a server computer having a processor and a storage device and a first client computer connected to the server computer. The system also includes a database to store information on copy reproduction requests. The stored information includes order information on copy reproduction requests and status information on copy reproduction requests. A second client computer is connected to the database to access the stored information on copy reproduction requests in the database. The second client computer is accessible by a copy reproduction service provider. An application, stored in the storage device of the server computer, is used to submit and monitor copy reproduction requests. The application is accessible by a user on the first client computer. The application includes the ability for a user to enter order information on a copy reproduction request, the ability to store the entered order information on a copy reproduction request in the database and the ability for a user to retrieve status information from the database on a copy reproduction request.

One advantage of the present invention is that users can electronically submit copy orders and files and electronically check status and delivery dates of the copy orders in an efficient, timely, safe, secure and approved manner.

Another advantage of the present invention is that the turn-around time for the completion of orders is reduced, thereby increasing the number of orders that are sent to the copy reproduction service provider resulting in a reduction in the cost of processing copy orders.

Yet another advantage of the present invention is that the copy reproduction service provider can produce very high quality copies of a document by receiving an electronic version of the document.

Other features and advantages of the present invention will be apparent from the following more detailed description of the preferred embodiment, taken in conjunction with the accompanying drawings which illustrate, by way of example, the principles of the invention.

The invention will now be described in greater detail, by way of example, with reference to the drawings, in which:-
Figure 1 illustrates a prior art process for the submission and completion of a copy reproduction order request.
Figure 2 illustrates a process for the submission and completion of a copy reproduction order request using the present invention.
Figures 3-5 illustrate order request forms for different types of copy reproduction services.
Figure 6 illustrates a window for the uploading of files for the copy reproduction service.
Figure 7 illustrates a copy reproduction management screen for a service provider.
Figure 8 illustrates an order request summary screen for a user.
Figure 9 illustrates a schematic arrangement of a system of the present invention.

Whenever possible, the same reference numbers will be used throughout the figures to refer to the same parts.

The present invention is directed to a system and application for a computer network that are used for submitting and monitoring copy reproduction requests. The computer network is preferably an Intranet, however the application can also be used with any other type of network, for example, the Internet, a local area network (LAN), a wide area network (WAN) or Extranet. The computer network preferably has a central or server computer that is used to store the application and associated databases that are used with the application. The computer network also preferably has one or more remote or client computers that can access the application stored on the server computer. The client computers and server computer can be any type of general purpose computer having memory devices (e.g. RAM, ROM, hard disk, CD-ROM, etc.), processing units (e.g. CPU, ALU, etc.) and input/output devices (e.g. monitor, keyboard, mouse, printer, etc.). The general purpose computer may also have communication devices (e.g. modems, network cards, etc.) for connecting or linking the general purpose computer to other computers.

In an another embodiment of the present invention, each of the client or remote computers are again linked together through an Intranet, however instead of accessing the application on the server computer, the client computers have loaded into their memory a complete copy of the application. The application is preferably a software application that is executed from the memory device of the client computer. The application can be loaded into the memory device of the client computer from a portable medium such as a CD-ROM, DVD-ROM, floppy disk, etc., that is inserted into the client computer. Alternatively, the application can be transferred or loaded directly into the memory device of the client computer through an electronic connection with another computer that has a stored copy of the application. In other words, the application can be downloaded to a client computer from another computer over the network. Finally, the application may be implemented as hardware and incorporated as part of either client computers or the server computer.

As discussed above, the preferred embodiment of the computer network is an Intranet. To access the Intranet, the users of the Intranet can be provided with an Intranet portal to assist users in navigating and using the Intranet. A preferred embodiment of the Intranet portal is a portal that is constructed using modules or components. The modules are small pieces of functionality or applications preferably implemented with Java Server Page (JSP) or Servlet application programming interface (API) technology to supply or provide access to data, applications, information and processes to the user over the Intranet. The application of the present invention is preferably implemented as a module for the preferred Intranet portal. However, it is to be understood that the application of the present invention can be configured and adapted for any system or environment and can also be used as a "stand-alone" application on the computer network.

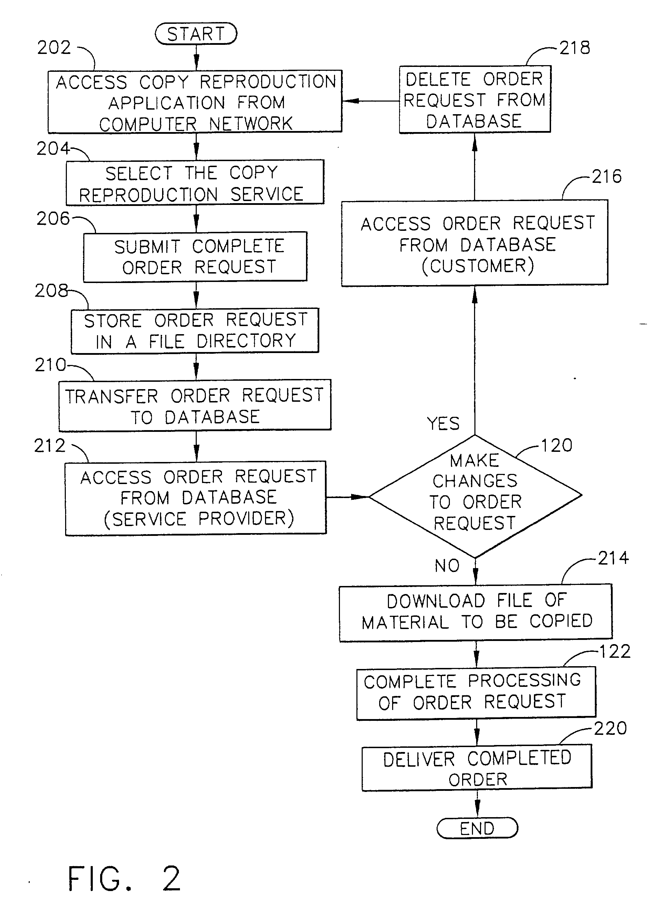

Figure 2 illustrates the steps for the submission (and subsequent completion) of a copy reproduction order request using the application of the present invention. The steps shown in Figure 2 start after a decision has been made to use a service provider as illustrated in step 104 in Figure 1. After deciding to use a service provider to complete the copy reproduction order or job, the user or customer accesses the copy reproduction application in step 202. The copy reproduction application provides the user with several different options and additional information about copy reproduction services. The user is provided with information on previous copy reproduction orders or tasks submitted by the user. The user can also obtain information or statistics on the number and types of tasks that have been submitted to the service provider by all users, by a department or by the user individually. Additionally, the user can obtain information on the service provider, such as the services offered, the service provider's location and hours of operation, contact information for the service provider or any other similar type of information.

In step 204, the customer then selects the desired copy reproduction service. Some examples of copy reproduction services include the making of black and white (B&W) or color copies, the making of wide format or poster sized copies and compact disc (CD) duplication. However, it is to be understood that any type of copy reproduction service provided by the service provider can be selected in step 204. The selection of a copy reproduction service by the user, results in an order request form to be completed by the user. The user is typically either linked to a web page with the order request form or is presented with the order request form in a pop-up window or box. The user provides the details regarding how the copy reproduction service should be completed by the service provider in the order request form. In addition, personal information about the user such as the user's name, telephone number, location, etc. is included in the order request form. Preferably, the user's personal information is stored in a file or profile on the network or Intranet and is then automatically retrieved and inserted in the order request form when the user selects the copy reproduction service. If the user's personal information is not stored in a file the user is prompted to enter personal information into the order request form. The entered information can then be stored in a file or profile for subsequent retrieval the next time the user requests a copy reproduction service.

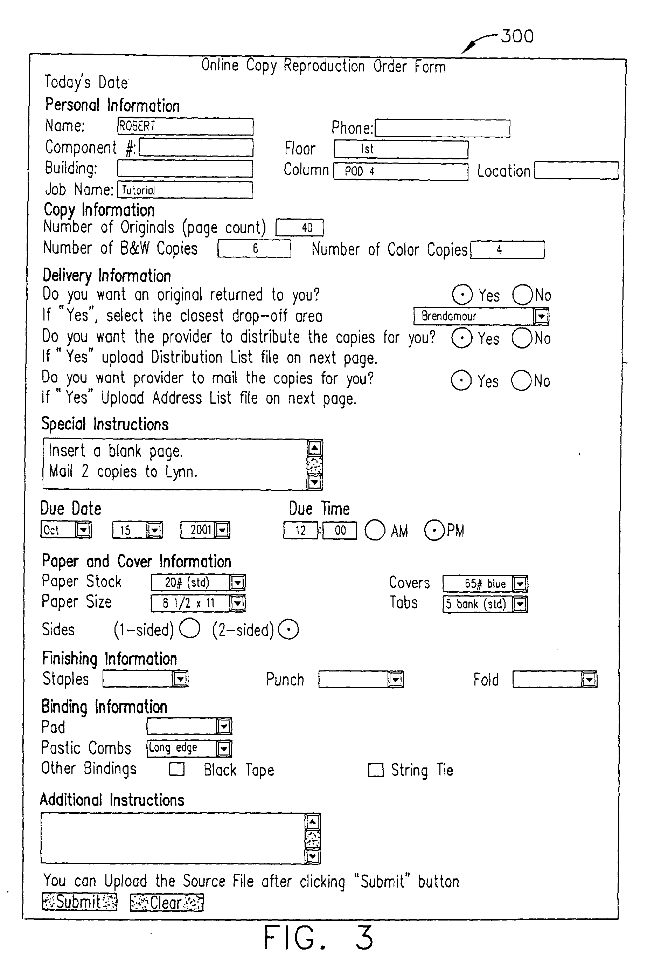

Figure 3 illustrates an order request form 300 for the copy reproduction service involving the making of B&W or color copies. On copy order request form 300, the user can provide copy information including the number of originals and the number of copies, delivery information including the due date of the order request, paper and cover information including the paper stock, paper size and cover type, finishing information including any stapling, hole punching or folding that is required and binding information including the use of any plastic combs. The user can also designate that the originals are to be returned to the user and/or that the copies are to be distributed or mailed by the service provider. Additionally, the user can provide the service provider with any additional instructions that were not included elsewhere in the copy order request form 300.

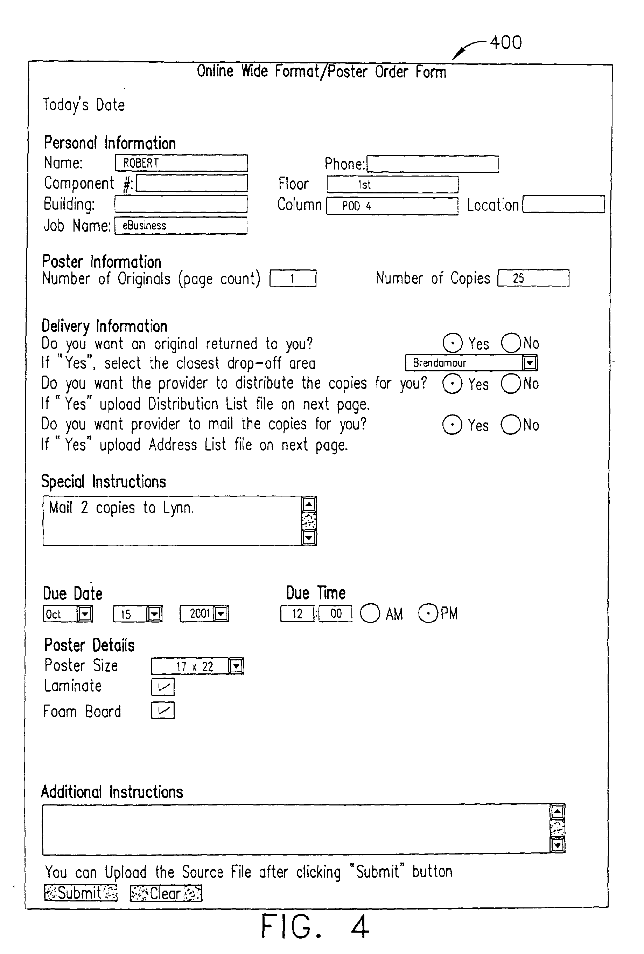

Figure 4 illustrates an order request form 400 for the wide format or poster copy reproduction service. On poster order request form 400, the user can provide copy information including the number of originals and the number of copies, delivery information including the due date of the order request, and poster information including the poster size and the use of foam board. As discussed above, the user can also designate that the originals are to be returned to the user and/or that the copies are to be distributed or mailed by the service provider. Additionally, the user can provide the service provider with any additional instructions that were not included elsewhere in the poster order request form 400.

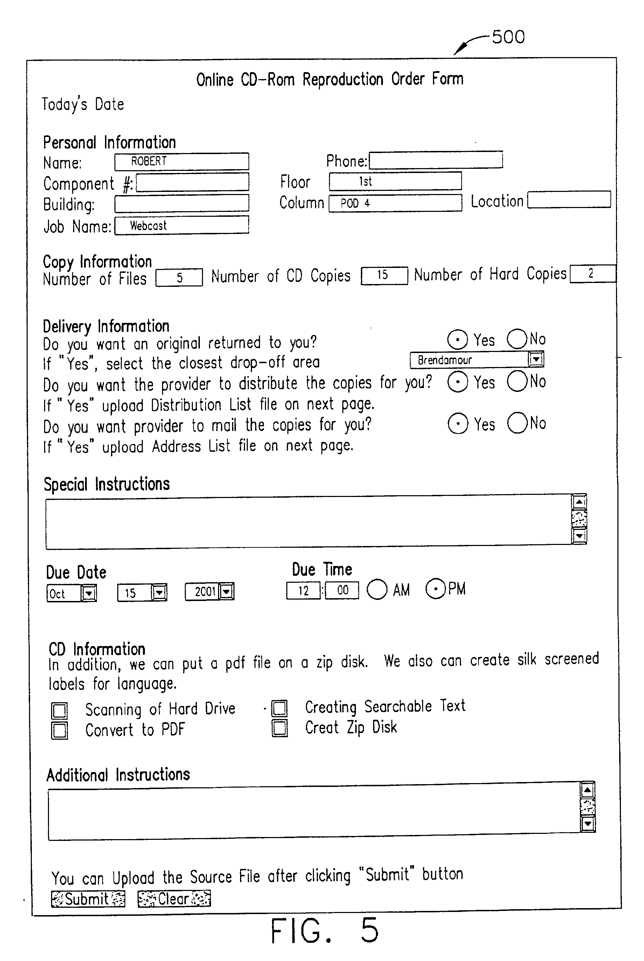

Figure 5 illustrates an order request form 500 for the CD duplication copy reproduction service. On CD order request form 500, the user can provide copy information including the number of files to be included on the CD, the number of CD copies and the number of hard copies, delivery information including the due date of the order request, and CD information including the conversion to portable doument format (PDF), the creation of searchable text and the creation of a ZIP disk. As discussed above, the user can also designate that the originals are to be returned to the user and/or that the copies are to be distributed or mailed by the service provider. Additionally, the user can provide the service provider with any additional instructions that were not included elsewhere in the CD order request form 500.

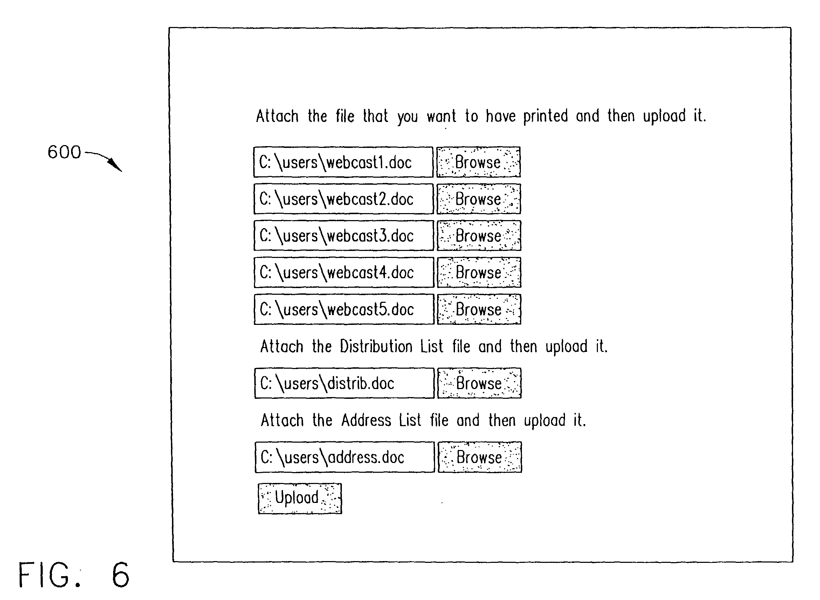

After the user completes the order request form, the user submits the order request form. Upon submission of the order request form, the user is then required to upload the appropriate files. To upload the appropriate files the user is either linked to a web page or is provided with a pop-up window for the upload of the appropriate files. Figure 6 illustrates an upload files window 600 for the user. In the upload files window 600, the user is required to select the appropriate file or files that are to be used in conjunction with the selected copy reproduction service. For example, the user would designate or select the file or files for copying or for inclusion on a CD. In addition, if the user selected the option for the service provider to mail or distribute the completed copy reproduction task, the user has to designate the appropriate file with the distribution list and/or designate the file with the addresses of the recipients.

After the user has designated the appropriate files, the user uploads the files and has submitted a complete order request in step 206 in Figure 2.

The order request form and the corresponding files are then stored in an file directory in step 208. The file directory is preferably an enterprise file system such as AFS®, but can be any type of suitable file system that permits file sharing from any location on the computer network. The submitted, complete order request form and corresponding files are assigned a work order number for tracking and given an initial status of "pending," which work order number and status are stored with the order request form and files in the file directory. The order request form, corresponding files and associated information are sent and stored in a database as a binary large object (BLOB) in step 210.

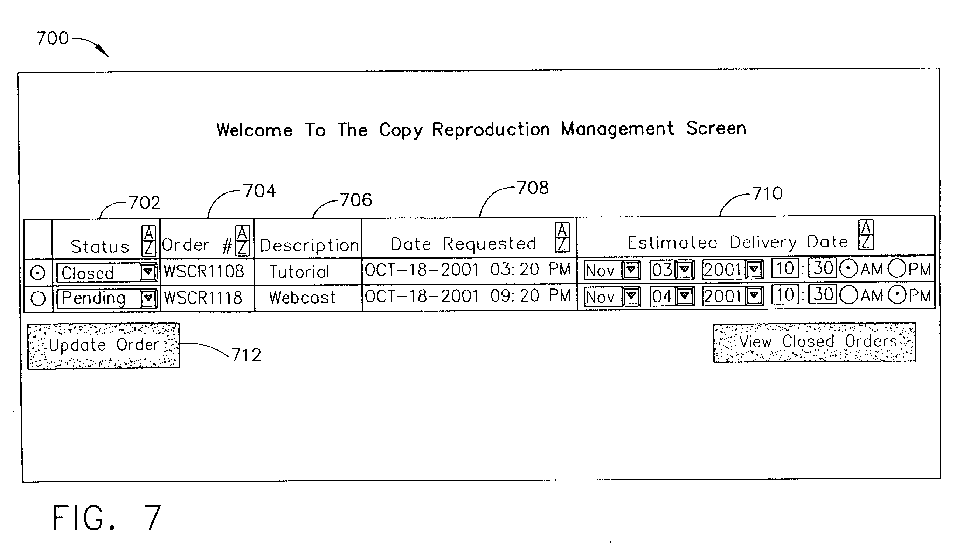

In step 212, the service provider accesses the order requests in the database in a manner to be described in greater detail below. The service provider is provided with a list of order requests for copy reproduction services that require processing by the service provider, i.e. all order requests that are not "closed." Figure 7 illustrates a list of order requests on a copy reproduction management screen 700. The copy reproduction management screen 700 includes columns for a status of the order request 702, an order number 704, an order request description 706, a due date for the order request 708 and an estimated completion date for the order request 710. All of the order requests, when initially accessed from the database, are provided with a status of pending in column 702. The service provider is responsible for changing the status of the order requests in column 702 as the work progresses on the order request. The order numbers in column 704 are preferably links to a web page or pop-up window having the specific details of the order request. The specific details of the order request include the information supplied by the customer on the order request form. After the service provider has reviewed the specific details of the order request, the corresponding files can be downloaded from the database to the service provider in step 214.

The downloading of the files in step 214 preferably occurs through a link or links that are included with the specific details of the order request. However, other methods of downloading the proper files can be used. The service provider has to download the file or files with the materials to be processed. In addition, the service provider has to download any distribution lists or address lists, if present. After all of the necessary files have been downloaded, the service provider changes the status of the order in column 702 and enters and estimated due date for the order request in column 710. The service provider can change the status of the order to "open" once work has started on the order, "closed" when work has been completed on the order and "hold" if work on the order is postponed for any reason, such as needing additional information from the user. The service provider then selects the update order option or button 712 and the information entered by the service provider is added to the database to update the information on the order request. The service provider then completes the order request in step 122 as described above and delivers the completed order in step 220. The service provider delivers the completed order in accordance with any instructions included in the order request using the downloaded distribution lists and address lists and updates the status of the order to "closed" as described above.

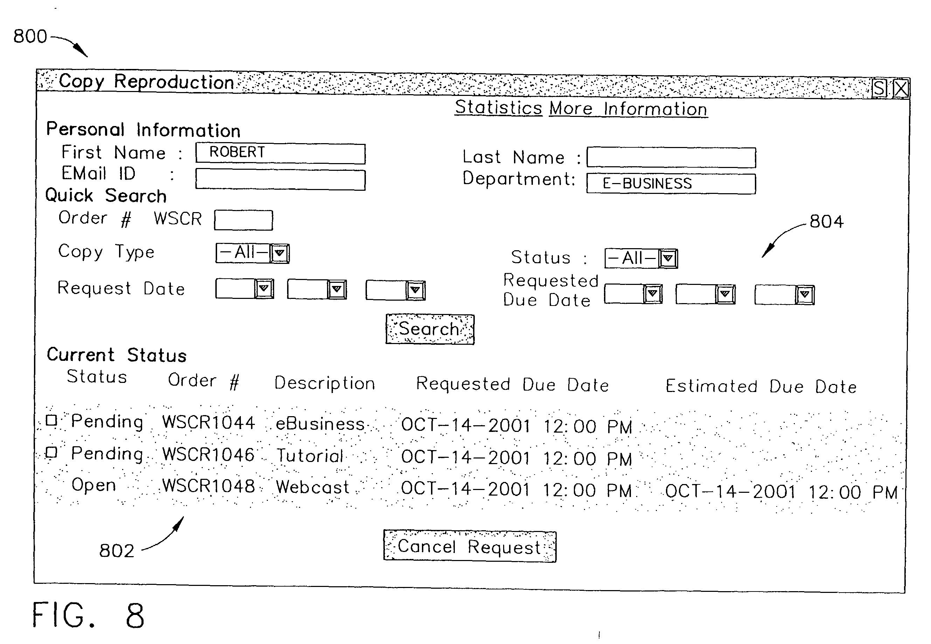

The user can again make changes to his order requests in step 120. In addition, the user can review the status of any order request submitted by the user. To make changes to an order request or to review the status of an order request, the user has to access the order requests from the database in step 216. Figure 8 illustrates an order request summary window 800 for the order requests of the user. In the order request summary window 800, the user is provided with a list 802 of order requests submitted by the user. The order request list 802 has status information, order number, order description information, a requested due date and an estimated due date for each order request. Similar to the order numbers provided to the service provider, the order number included in the order request list 802 are preferably links to a window or web page that has the details of the order request submitted by the user. The user can select order request(s) from the order request list 802 and cancel the order request(s) in step 218. When the user cancels an order request, the status of the order request in the database is changed to "canceled," and is reflected in the order request list 802. This status change is also transmitted to the service provider from the database and indicated in order status column 702 for that order request, the next time the service provider updates the copy reproduction management screen 700. However, the user is not permitted to cancel an order if the status of the order is "open," "closed," or "hold." If the user canceled the order request in order to make changes to the order request, the user can make the necessary changes and resubmit the order request again, starting at step 202.

The user also has the option of filtering the order request list 802 in order request summary window 800. The user is provided with a variety of filtering options in section 804. The user can preferably search or filter the order request list 802 on the order number, the copy type requested, the order status, the submission date of the order or the requested due date of the order. However, it is to be understood that the user can search or filter the order requests based on any information that is included in the database for the order requests. The user can also search or filter on more than one of the above categories to generate an order request list 802 that is most useful to the user.

Similarly, the service provider has the option of filtering the list of order requests in the copy reproduction management screen 700. The service provider is provided with a variety of filtering options. The service provider can preferably search or filter the list of order requests on the order number, the copy type requested, the order status, the submission date of the order or the requested due date of the order. However, it is to be understood that the service provider can search or filter the order requests based on any information that is included in the database for the order requests. The service provider can also search or filter on more than one of the above categories to generate a list of order requests that is most useful to the service provider.

As discussed above, the database stores information on closed orders, whether the order is closed by the user or by the service provider, for a predetermined time period, after which the order request information is either deleted from the database or permitted to be overwritten in the database. The predetermined time period is preferably about seven days after the status of the order request has been changed to "closed" or "canceled," however different predetermined time periods can be used based on the storage capabilities of the database and the need for record keeping. The "closed" and "canceled" order requests stored in the database are in the order request list 802, each time the user accesses the order request summary window 800. In addition, the service provider can access information on "closed" order requests in the database from the service provider management screen.

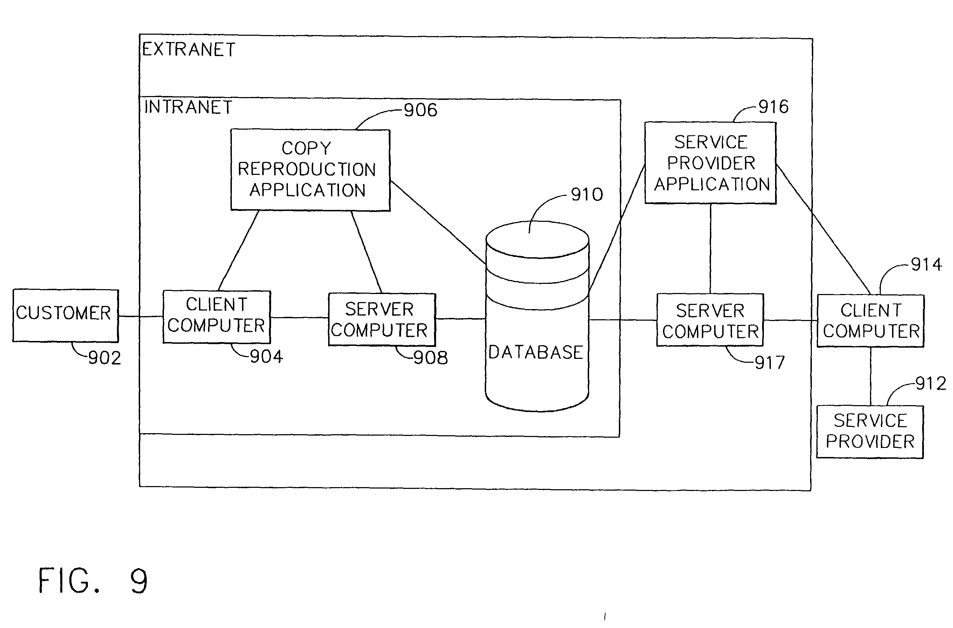

Figure 9 illustrates a schematic arrangement of a preferred embodiment of the system of the present invention. As discussed above, a user or customer 902 through a client computer 904 accesses the copy reproduction application 906 from a server computer 908 on the Intranet. The server computer 908 and the copy reproduction application 906 can communicate with the order database 910 to load new order request information or to retrieve stored order request information for the customer 902.

To access the order request information stored in the database 910, the service provider 912 through a second client computer 914 has to access a service provider application 916 from a second server computer 917 on an Extranet. To access the service provider application 916, the service provider 912 has to provide authentication information to obtain access to the Extranet and to the service provider application 916. The service provider application 916 can then retrieve the necessary order information from the database 910 for action by the service provider 912. Preferably there are several people who have the authentication information for the service provider 912, so that the service provider 910 can frequently be accessing the database 910 to obtain the order requests in a timely manner. The requirement that the service provider 912 provide authentication information to access the service provider application 916 permits the service provider 912 to be replaced with little or no difficulty. Once a decision has been made to discontinue the use of a service provider, the service provider's authentication information for accessing the service provider application 916 is revoked, thereby preventing the service provider from accessing the service provider application 916 and obtaining the order requests. A replacement service provider can then be provided with authentication information to permit the replacement service provider to access the service provider application 916 and obtain the order requests for processing.

## Claims

1. A system for submitting and monitoring copy reproduction order requests, the system comprising:
a database (910) to store information on copy reproduction requests, wherein the stored information comprises order information on copy reproduction requests and status information on copy reproduction requests;
a first client computer (904) communicating with the database (910), wherein the first client computer (904) being accessible by a user (902);
a second client computer (914) communicating with the database (910) to access the stored information on copy reproduction requests in the database (910), wherein the second client computer (914) being accessible by a copy reproduction service provider (912); and
an application (906) for submitting and monitoring copy reproduction requests accessible on the first client computer (904) by a user (902), the application (906) comprising:
means for entering order information on a copy reproduction request by a user (902);
means for storing the entered order information on a copy reproduction request in the database (910); and
means for retrieving status information from the database (910) on a copy reproduction request submitted by a user (902).

2. The system of claim 1 wherein:
the stored information further comprises:
at least one file having material to be copied by the copy reproduction service provider (912); and
at least one file having distribution information for the copy reproduction service provider (912) to distribute completed copies; and
the application (906) further comprises:
means for uploading the at least one file having material to be copied to the database (910); and
means for uploading the at least one file having distribution information to the database (910).

3. The system of claim 1 or 2 further comprising an additional application (916) for processing copy reproduction requests, wherein the additional application (916) is accessible by a copy reproduction service provider (912) on the second client computer (914), the additional application (916) comprising:
means for reviewing order information from the database (910) on a copy reproduction request by a user (902);
means for downloading the at least one file having material to be copied from the database (910) to the second client computer (914) for a copy reproduction request by a user (902); and
means for updating the status information in the database (910) for a copy reproduction request by a user (902).

4. The system of any preceding claim further comprising:
a server computer (908) connected to the first client computer (904), the server computer (908) comprising a storage device to store the application (906) for submitting and monitoring copy reproduction requests;
an additional server computer (917) connected to the second client computer (914), the additional server computer (917) comprising a storage device to store the additional application (916) for processing copy reproduction requests; and
means for a copy reproduction service provider (912) to provide authentication information to access the additional application (916) for processing copy reproduction requests stored on the additional server computer (917).

5. The system of claim 4 wherein the additional application (916) for processing copy reproduction requests is accessed from the additional server computer (917) on an Extranet and the database (910) is accessed from an Intranet.

6. The system of claim 1 wherein:
the stored information on copy reproduction requests in the database (910) is stored as binary large objects; and
the means for entering order information on a copy reproduction request by a user (902) further comprises a copy reproduction order form (300), a wide format order form (400) and a CD-ROM reproduction order form (500).

7. The system of claim 1 wherein the application (906) further comprises:
means for changing, by a user (902), the status information on a copy reproduction request in the database (910).
means for editing, by a user (902), the stored information on copy reproduction requests in the database (910); and
means for filtering, by a user (902), the stored information on copy reproduction requests in the database (910).

8. A method of submitting a copy reproduction order request to a copy reproduction service provider (912), the method comprising the steps of:
accessing (202), by a user (902), a copy reproduction application (906) from a computer network;
selecting (204), by a user (902), a copy reproduction service to be provided by a copy reproduction service provider (912) using the copy reproduction application (906);
completing, by a user (902), a copy reproduction order request for the selected copy reproduction service using the copy reproduction application (906);
storing (208) the completed copy reproduction order request in a database (910), the completed copy reproduction order request including at least one file having material to be copied by the copy reproduction service provider (912);
accessing (212), by the copy reproduction service provider (912), a plurality of copy reproduction order requests from the database (910) using a service provider application (916); and
downloading (214) from the database (910), by the copy reproduction service provider (912), the at least one file having material to be copied for a copy reproduction order request selected by the copy reproduction service provider (912) for making copies of the material to be copied.

9. The method of claim 8 further comprising the steps of:
automatically entering into the copy reproduction order request, by the copy reproduction application (906), personal information of a user (902); and
uploading the at least one file having material to be copied by the copy reproduction service provider (912) to the database (910).

10. The method of claim 8 further comprising the steps of:
storing (208) the completed copy reproduction order request in a file directory; and
transferring (210) the completed copy reproduction order request from the file directory to the database (910).
